# EUROPEAN PATENT APPLICATION

(11) **EP 2 166 492 A2**
(43) Date of publication of application: **24.03.2010**
(21) Application number: 08170409.0
(22) Date of filing: 01.12.2008
(51) Int. Cl.: G06Q 10/00

(54) **Vehicle deployment planning system**

(30) Priority: 12.12.2007 US 955198
(71) Applicant: Honeywell International Inc., Morristown, NJ 07962 (US)
(72) Inventor: Wright, George L., Corrales, NM 87048 (US); Wright, Mark A., Albuquerque, NM 87111 (US)
(74) Representative: Buckley, Guy Julian

(57) **Abstract**

A vehicle deployment planning method and system are provided for planning a convoy that travels on at least one roadway using a convoy planning tool. The tool includes a computer processor, data storage, and machine language instructions that enable the tool to perform the following tasks. The tool finds one or more available vehicles for the convoy. The tool displays the one or more available vehicles in a vehicle corral. The user of the tool selects one or more vehicles from the vehicle corral. The user places the selected one or more vehicles in a position in the convoy. The tool displays the placed one or more vehicles in the convoy. The tool determines a convoy configuration is complete and then displays the complete convoy configuration.

## Description

### BACKGROUND OF THE INVENTION

### 1. Field of the Invention

This invention relates to the field of computerized vehicle organization. Most particularly, this invention relates to an apparatus, method, and system for the use of computer software to organize vehicles into a convoy for transporting cargo along at least one roadway.

### 2. Description of Related Art

Frequently, cargo and personnel are transported from a source location to a destination location. When the cargo and personnel are of sufficient quantity, the cargo and personnel are transported by two or more vehicles traveling in a group. This group is commonly and herein termed a "convoy." Typically, a convoy commander in a military environment or a convoy planner in a civilian environment plans the convoy.

The convoy commander or planner plans the convoy based on a number of different variables. These variables may include: requirements about the cargo to be transported, the availability of vehicles used to transport the cargo, the availability of drivers to operating the vehicles in the convoy, the choices of routes between the source and destination, and conditions likely to be encountered *en route.*

As the number of vehicles increase, the planning complexity also increases. A tool to assist in planning would be desirable.

### SUMMARY

A first principal embodiment of the invention provides a convoy planning tool for planning a configuration of a convoy that travels one or more roadways. The convoy planning tool includes a computer processor, a selection device, and data storage. The convoy planning tool includes software executable by the computer processor and stored in the data storage. The convoy planning tool can find one or more available vehicles for the convoy and display the available vehicles in a vehicle corral. A user of the convoy planning tool can select available vehicles from the vehicle corral and can place the selected vehicles in a position within the convoy. The convoy planning tool can display a configuration of the convoy, including the one or more selected vehicles. The convoy planning tool can determine that the configuration of the convoy is complete and, in turn, display the complete configuration of the convoy.

A second principal embodiment of the invention provides a computerized method for planning a convoy with a convoy planning tool, wherein the convoy travels on one or more roadways. One or more requirements for the convoy are determined from a convoy requirements database. One or more vehicles are determined as available from a vehicle database. The one or more available vehicles are displayed in a vehicle corral of the convoy planning tool. The one or more available vehicles are selected from the vehicle corral. Upon request of the user of the convoy planning tool, the one or more selected vehicles are placed in a configuration of the convoy. The configuration of the convoy is determined to be complete based, at least in part, on input from the user of the convoy planning tool and on one or more requirements for the convoy.

A third principal embodiment of the invention provides a convoy planning system for planning a convoy, wherein the convoy carries cargo and travels along at least one roadway in a complete configuration. The convoy planning system includes a vehicle database. The vehicle database has one or more vehicle records. Each of the one or more vehicle records has availability data and vehicle data. The convoy planning system includes a convoy requirements database that has a plurality of convoy requirements records. The convoy planning system includes a convoy planning tool, having a computer processor, a selection device, data storage, and machine language instructions executable by the computer processor and stored in the data storage. The machine language instructions are executable to search both the convoy requirements database for one or more convoy requirements records and the vehicle database for one or more available vehicle records. The availability data of the one or more available vehicle records indicates a vehicle is available. The vehicle data of the one or more available vehicle records indicates the vehicle would at least partially fulfill the one or more convoy requirements for the convoy.

The machine language instructions are executable to, while the configuration of the convoy is not determined to be the complete configuration of the convoy: (a) display the one or more available vehicles to a user in a vehicle corral, (b) allow the user, using the selection device, to select one or more available vehicles from the vehicle corral, (c) allow the user, using the selection device, to place one or more selected vehicles in a placed position of the convoy, (d) display a configuration of the convoy that includes the one or more placed vehicles in the placed position of the convoy, (e) display the vehicle corral without the one or more placed vehicles, (f) allow the user, using the selection device, to re-select one or more vehicles in the convoy, (g) allow the user, using the selection device, to return the one or more re-selected vehicles to the vehicle corral, (h) display the one or more returned vehicles in the vehicle corral, (i) display the configuration of the convoy without the one or more returned vehicles, and (j) determine the configuration of the convoy is complete, based, at least in part, on the one or more convoy requirements for the convoy. The machine language instructions are executable to display the complete configuration of the convoy.

### BRIEF DESCRIPTION OF THE DRAWINGS

Figure 1 is a conceptual view of the convoy planning tool, indicating a first convoy being planned from a group of available vehicles.
Figure 1A shows a block diagram of a computing device.
Figure 2 is a view of the convoy planning tool in the process of planning a second convoy indicating the vehicles selected to be in the convoy, available vehicles, drivers, tactical command, cargo requirements, and access to additional information, in accordance with an embodiment of the invention.
Figure 3 is a view of the convoy planning tool showing additional information about a selected vehicle, in accordance with an embodiment of the invention.
Figure 4 is a convoy planning template indicating a possible configuration of a convoy based on convoy requirements and additional information, in accordance with an embodiment of the invention.
Figure 5 is a depiction of a route for a convoy with multiple types of points along the route, including sources or starting points, destinations, checkpoints, and rally points.
Figure 6 is a communication overview showing the communications and vehicle attributes of a third convoy, in accordance with an embodiment of the invention.
Figure 7 is a complete convoy configuration of a fourth convoy as planned by the convoy planning tool, in accordance with an embodiment of the invention.
Figure 8 is a depiction of a route display of the convoy planning tool for the route of Figure 5, indicating the real-time position of a fifth convoy *en route,* in accordance with an embodiment of the invention.
Figure 9 is a set of role assignments, indicating primary and backup roles, for defining access to the convoy planning tool based on an assigned role to a user of the convoy planning tool, in accordance with an embodiment of the invention.
Figure 10 is a flowchart describing a method for planning a convoy using the convoy planning tool, in accordance with an embodiment of the invention.

### DETAILED DESCRIPTION OF EMBODIMENT OF THE INVENTIONS

### 1. Convoy Planning Tool and System

A convoy planning tool, which includes computer software, may allow a user of the convoy planning tool, typically a convoy commander or planner, to plan a convoy interactively. The convoy planning tool may have computer software to: find available vehicles for the convoy, display the available vehicles, allow the user to select and place vehicles in a configuration of the convoy, display the convoy, determine the configuration of the convoy is complete, and display the complete configuration of the convoy. The convoy planning tool may be included in a method or system for planning a convoy.

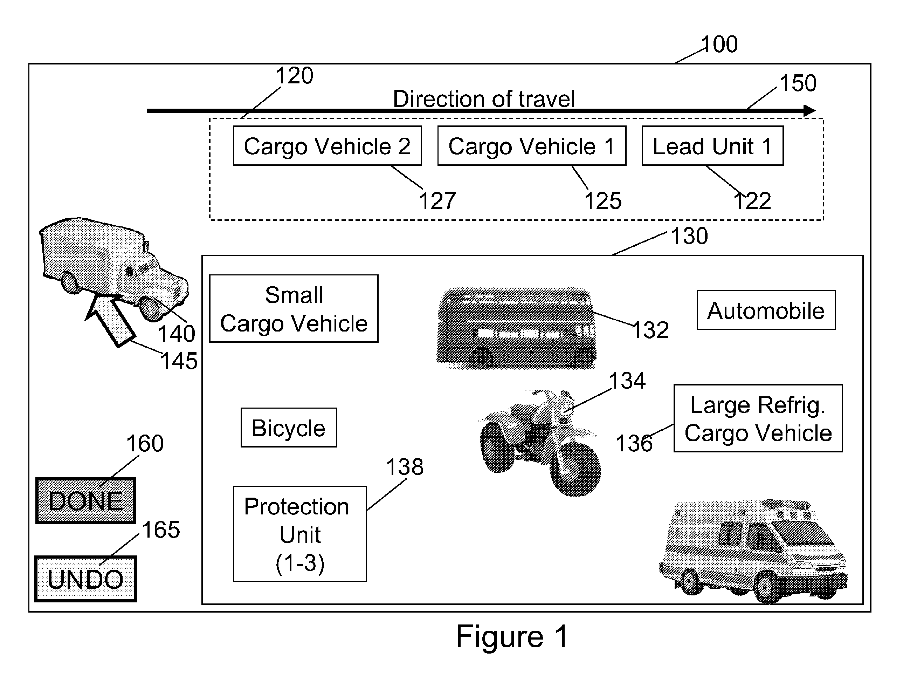

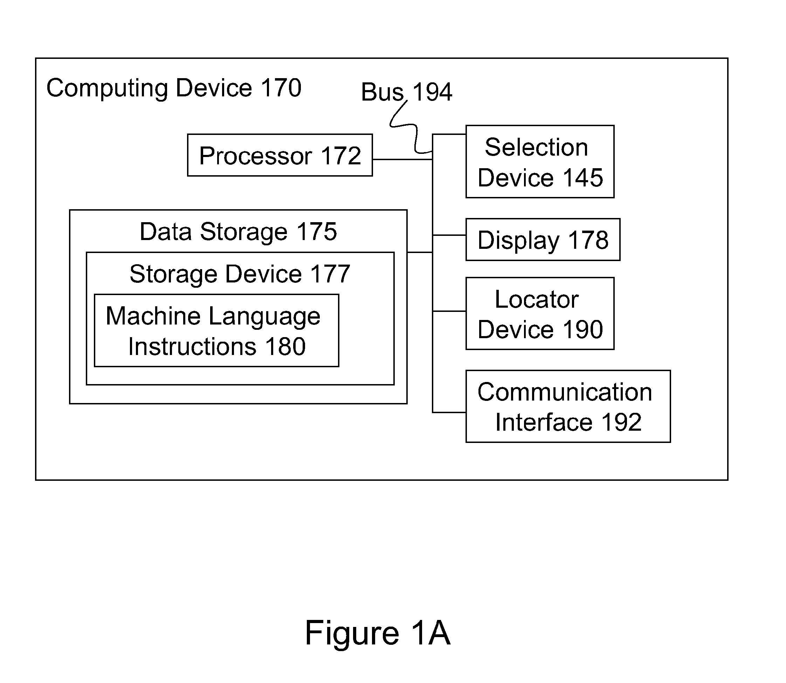

Figure 1 shows a conceptual view of the convoy planning tool 100, indicating a first convoy 120 being planned from a group of available vehicles 130. The convoy planning tool 100 may include computer software that can be executed on any computing device with a computer processor and data storage with sufficient processing power and storage capacity to execute the convoy planning tool.

Figure 1A shows a block diagram of a computing device 170. The computer software for the convoy planning tool 100 may comprise machine language instructions 180 executable on a computer processor 172 of computing device 170 and stored in data storage 175. The computer processor 172 may include one or more central processing units, computer processors, mobile processors, microprocessors, computer chips, and similar processing units that execute machine instructions and processes data. As shown in Figure 1A, the components of computing device 170 may be communicatively coupled to permit computer processor 172 to control, communicate with, and use the other components of computing device 170, including, but not limited to, selection device 145, data storage 175, display 178, machine language instructions 180, locator device 190, and communication interface 192. The communicative coupling is shown in Figure 1A using bus 194. Computing device 170 may use other communicative coupling architectures, such as direct connection of components or"plug and play" couplings, such as Universal Serial Bus couplings, among others known to those skilled in the art.

Data storage 175 may comprise one or more storage devices 177. Storage device 177 may include read-only memory (ROM), random access memory (RAM), removable disk drive memory, hard disk memory, magnetic tape memory, flash memory, and similar storage devices. Storage device 177 may store machine language instructions 180. The computing device 170 may have one or more selection devices 145 that may act also as user input mechanisms, such as a computer mouse, keyboard, keypad, touch screen, and similar selection devices. The computing device 170 may have one or more displays 178, including cathode-ray tubes (CRTs), liquid crystal displays (LCDs), light emitting diodes (LCD), and similar displays. Display 178 may be used to display part or all of the information provided by convoy planning tool 100 to a user of convoy planning tool 100. The computing device 170 may be stationary or portable. A portable computing device 170 may be a laptop or notebook computer, personal data assistant (PDA), mobile phone, or any similar device that is portable and equipped with a processing unit and at least a portion of the convoy planning tool software. The computing device 170 may have a locator device 190 and one or more communication interfaces 192.

Returning to Figure 1, the user of the convoy planning tool 100 may plan first convoy 120 from the pool of available vehicles 130. The user may plan the convoy by using a selection device 145 to select at least one vehicle 140 to add to first convoy 120. First convoy 120 may travel along one or more roadways to deliver cargo from a source to a destination. A roadway is an identifiable route, way, or path between two or more places suitable for travel by at least one vehicle, not including railroads. A roadway may be temporary or permanent, paved or unpaved, or marked or unmarked, not including rail roads.

First convoy 120 may include one or more vehicles. Figure 1 shows first convoy 120 with 3 vehicles: a lead unit 122, a first cargo vehicle 125, and a second cargo vehicle 127. The lead unit 122 may be a protection unit for the convoy, such as a military or police escort vehicle. While Figure 1 depicts one protection unit in first convoy 120, there may be zero, one, or multiple protection units, including lead units, in a convoy. First cargo vehicle 125 and second cargo vehicle 127 may be of the same type of vehicle. Vehicles of the same type may share similar characteristics, such as dimensions (length, width, and height), towing capacity, cargo type, approximate mileage and time in service, and required driver qualifications. Depicting vehicles of the same type in a similar manner, as with first cargo vehicle 125 and second cargo vehicle 127, may aid the user in planning the convoy by allowing the user to quickly identify two or more of the same type of vehicles. Once identified, the user may readily plan the use of the same type of vehicle in the same or similar ways within the convoy.

First convoy 120 may be planned using vehicles in the pool of available vehicles 130. As shown in Figure 1, available vehicles may be represented to the user of convoy planning tool 100 pictorially, as with bus 132 and motorcycle 134, or textually, as with large refrigerated cargo vehicle 136 and protection units 138. The available vehicles may be represented individually, as bus 132, motorcycle 134, and large cargo vehicle 136, or as a group, as with protection units 138. Available vehicles may also indicate environment-specific equipment, such as, but not limited to, arctic-specific or desert-specific equipment, more durable tires, suspension, and other equipment for traversing temporary roads, armor and ordnance for military vehicles, and cargo-specific equipment for carrying specific types of cargo, such as, but not limited to, refrigeration units, tanker containers, and flat-bed trailers. As shown in Figure 1, motorcycle 134 is shown with environment-specific equipment for traversing temporary roads and large refrigerated cargo vehicle 136 textually indicates cargo-specific equipment for carrying cargo that requires refrigeration. A group representation may include the number of members in the group, as shown in Figure 1 with the "(1-3)" designation for protection units 138 to indicate 1 to 3 protection units as available vehicles.

A vehicle may be found to be available and added to the pool of available vehicles 130 in one or more ways. Convoy planning tool 100 may include an available vehicle database. The available vehicle database may be stored on the same computing device on which convoy planning tool 100 is executed or the database may be stored on one or more other computing devices. The available vehicle database may be stored in one or more of a variety of database file structures, including flat files, relational database tables, tree structures, or any other database file structure now in use or to be invented. The database software may be created by the authors of the convoy planning tool or may be provided by third party database providers. The available vehicle database may store information for any vehicle that can travel on one or more roadways. The available vehicle database may store information in one or more vehicle records. Each vehicle record may include the type of vehicle, the availability of the vehicle, location information for the vehicle, required permits to use the vehicle, driver qualifications needed to use the vehicle, and equipment information that indicates a vehicle is equipped with environment-specific equipment and/or cargo-specific equipment as described above. A vehicle may be found to be available depending on the value of the availability of the vehicle in the vehicle record. A vehicle may also be found to be available based on user input.

Convoy planning tool 100 may have one or more convoy planning database interfaces to access the available vehicle database. A local convoy planning database interface may provide access to the available vehicle database stored on the same computing device as convoy planning tool 100. A network convoy planning database interface may provide access, directly or indirectly through one or more database servers, to the available vehicle database stored on the one or more other computing devices through a data communications network, such as the Internet, a private data communications network, or a virtual private network (VPN), with or without the network being secured. As is well known in the art, communication between convoy planning tool 100 and the available vehicle database may take place through the form of database queries using a database query language or an information retrieval query language, such as Structured Query Language (SQL), SQL in Java (SQLJ), Common Query Language (CQL), Object Query Language (OQL), or another database query language or information retrieval query language.

An interactive method of planning first convoy 120 may involve selecting vehicles from the pool of available vehicles 130 depicted by convoy planning tool 100 and adding them to first convoy 120 to determine a convoy configuration. Selecting one or more vehicles from the pool of available vehicles may involve the user selecting one or more vehicles from the pool of available vehicles with a selection device. The one or more selected vehicles may be placed in a convoy in a placed position or returned to the vehicle corral by use of the selection device. For example, the one or more selected vehicles may be placed in the convoy by first selecting the one or more available vehicles, moving or dragging the one or more selected vehicles with the selection device to the placed position, and then un-selecting or dropping the one or more selected vehicle at the placed position.

Figure 1 shows that vehicle 140 has been selected from the pool of available vehicles 130 with selection device 145 and selected vehicle 140 is being dragged with selection device 145. The user may drop selected vehicle 140 into a placed position in first convoy 120 both to add selected vehicle 140 to first convoy 120 and to remove selected vehicle 140 from the pool of available vehicles 130. The user may drop selected vehicle 140 into the pool of available vehicles 130 both to remove selected vehicle 140 from first convoy 120 and to add selected vehicle 140 to the pool of available vehicles 130. The convoy may plan to travel in a specified direction of travel. Figure 1 shows convoy planning tool 100 indicating, by use of arrow 150, the specified direction of travel for first convoy 120.

Once the user has finished placing vehicles in the convoy, the configuration of first convoy 120 may be determined to be complete such that first convoy 120 may travel in the complete configuration to carry the cargo along at least one roadway. The convoy planning tool may determine the configuration of the convoy is complete based on input from the user. Figure 1 shows a DONE button 160 the user may select to indicate to convoy planning tool 100 that the configuration of first convoy 120 is complete and the convoy is completed. Figure 1 also shows a UNDO button 165 that allows the user to indicate to convoy planning tool 100 that a convoy in a completed configuration needs further changes, thereby undoing the act of indicating the convoy is complete.

Alternatively, convoy planning tool 100 could automatically or algorithmically determine the configuration of first convoy 120 is complete, based, at least in part, on several configuration completeness variables, such as the convoy requirements, the number and types of available vehicles, and the route to be traveled. In another alternative, convoy planning tool 100 determines that the configuration of first convoy 120 is complete using a combination of user input and algorithmic determination. For example, convoy planning tool 100 may provide a pictorial, textual, and/or audio notification to the user that the configuration of first convoy 120 meets the convoy requirements and, then, the user may provide input to convoy planning tool 100 that the configuration of the first convoy 120 is complete. Once the configuration of first convoy 120 is complete, the complete configuration of first convoy 120 may be displayed to the user of convoy planning tool 100.

It may be desired that the user travel with first convoy 120. To allow the user to travel with the convoy, the convoy planning tool 100 may be provided on a portable computing device 170. Both portable and stationary computing devices 170 frequently permit communication using one or more communications interfaces 192, particularly to communicate between portable computing devices. A user may use the communication between portable computing devices to keep the convoy organized *en route* by voice and/or data communication with drivers and subordinate commanders or planners equipped with their own portable computing devices. A portable computing device frequently is used to connect to voice and/or data networks with the one or more communications interfaces 192. Portable computing devices may search for information on data networks, such as the Internet, and then to provide that information to other personnel in the convoy. An exemplary method for providing *en route* communications for a convoy is by use of a configuration aware packet routing method. An exemplary configuration aware packet method is described in U.S. Patent Applications 11/613749, 11/613700, and 11/612730. The three aforementioned patent applications are incorporated by reference herein.

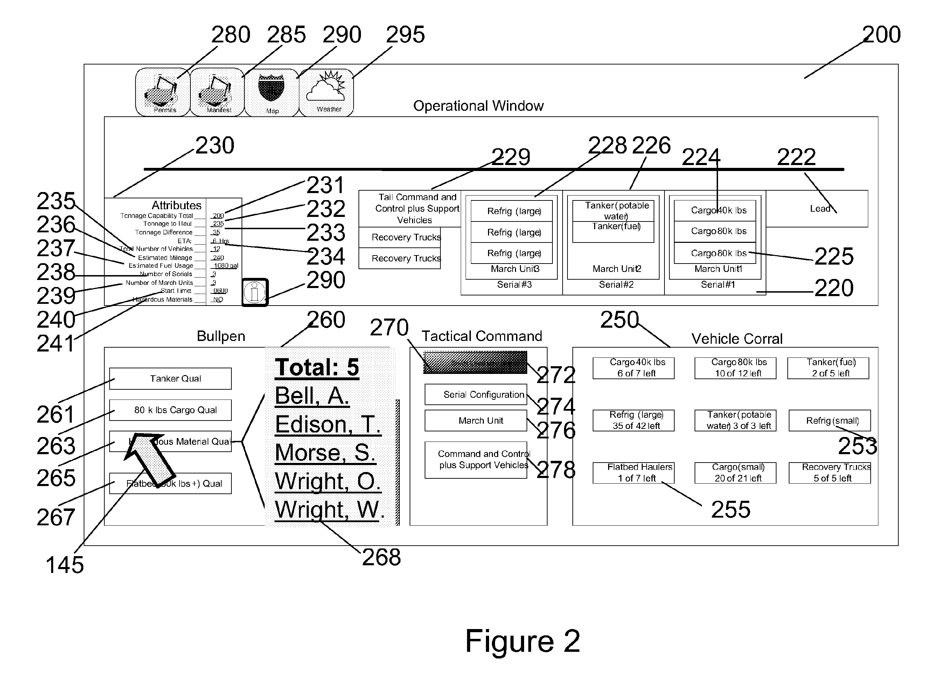

Figure 2 is a view of a convoy planning tool 200 in the process of planning a second convoy 220 indicating the vehicles selected to be in second convoy 220, cargo requirements 230, available vehicles in vehicle corral 250, drivers in bullpen 260, tactical command 270, and access to additional information 280-295, in accordance with an embodiment of the invention. A convoy may be divided into sub-groups of the convoy and each sub-group may contain one or more vehicles that may be shown to the user. As shown in Figure 2, second convoy 220 contains a lead sub-group 220, a first march unit sub-group 224 depicted with three cargo vehicles 225, a second march unit sub-group 226 depicted with tanker units for carrying both fuel and water, a third march unit sub-group 228 depicted with refrigerator units, and tail command and control sub-group 229 depicted with recovery trucks. Sub-groups not depicted with vehicles may be place-holders indicating a position in the convoy without units currently selected such as lead unit 222. Once units are selected for a position in the convoy, they may be depicted in the proper position, such cargo vehicles 225 being depicted in first march unit sub-group 224 of second convoy 220.

Convoy requirements and selections 230 may be depicted by convoy planning tool 200. Convoy selections may be depicted as summary values that require algorithmic or other calculation before display, such as tonnage capacity total 231, tonnage difference 233, total number of vehicles 235, estimated fuel usage 237, number of serials 238, number of march units 239, and hazardous materials indicator 241. Convoy requirements and selections may include convoy requirements, such as tonnage to haul 232, estimated time of arrival (ETA) 234, estimated mileage 236, and start time 240. Depending on specific convoy requirements and selections, such as routes or types of vehicles, certain indicators may reflect selections made the user of convoy planning tool 200, convoy requirements, or both selections made by the user and requirements, such as ETA 234, estimated mileage 236, number of serials 238, number of march units 239, or hazardous materials indicator 241.

Convoy selections and requirements 230 may indicate information about the vehicles selected to be in second convoy 220, such as tonnage capability total 231, total number of vehicles 235, and hazardous materials indicator 241. Convoy selections and requirements 230 may indicate information about the route, such as estimated mileage 235. Convoy selections and requirements 230 may indicate information that combines information about the vehicles and the route, such as ETA 234 and estimated fuel usage 237.

Convoy selections and requirements 230 may be provided to convoy planning tool 200 through one or more convoy requirements databases. Convoy requirements may be stored in the convoy requirements database in one or more convoy requirements records. The discussion above about possible choices of database interfaces, structures, and providers for the available vehicle database applies as well to the one or convoy requirements databases. Convoy selections and requirements 230 may be determined based, wholly or in part, on one or more inputs by the user of convoy planning tool 200. Convoy planning tool 200 may provide one or more convoy requirements input views to allow the user to input one or more convoy requirements, such as route information, cargo information, and ETA, among others. In another embodiment of the invention, convoy requirements may be provided to convoy planning tool 200 by one or more convoy requirements servers sending one or more convoy requirements to convoy planning tool 200.

The pool of available vehicles may be shown in a vehicle corral 250. The vehicle corral 250 may indicate an individual vehicle or a class of vehicles, such as "Refrig (small)" class 253. Vehicle corral 250 may also indicate the available number of a class of vehicles, such as the "1 of 7 left" for flatbed haulers 255. While only textual depictions of classes of vehicles are shown in Figure 2, vehicle corral 250 may depict an image of a vehicle or class of vehicles.

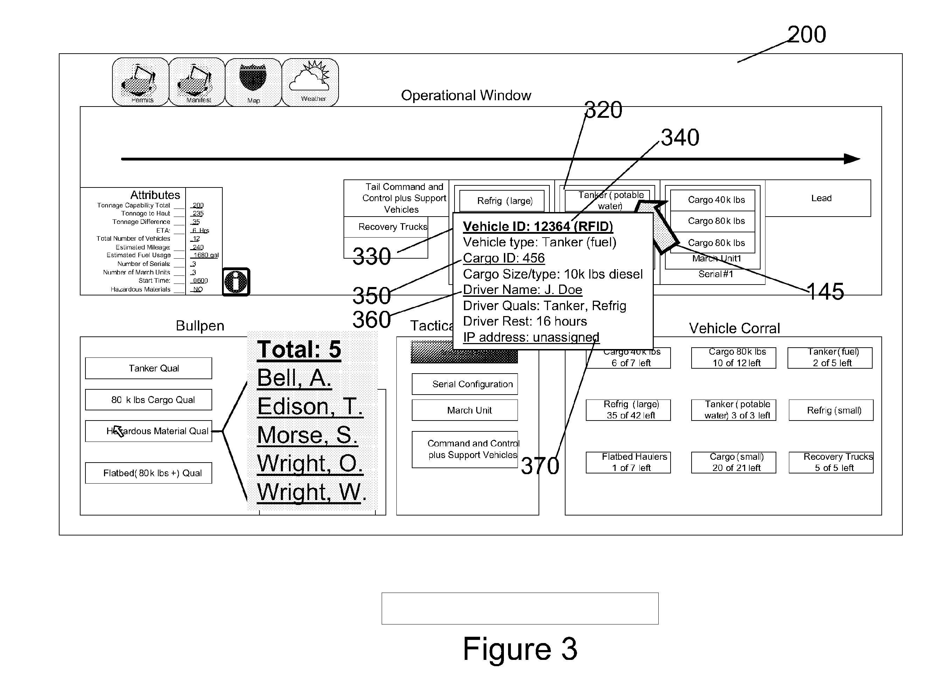

The pool of available drivers may be shown in a bullpen 260. The bullpen may include lists of available drivers based on driver qualifications. The user of convoy planning tool 200 may be able to select portions of driver list 268 to be presented using one or more driver qualifications buttons, such as the qualification to drive tankers button 261, 80k cargo vehicle driving qualification button 263, hazardous material handling qualification button 265, and flatbed qualification button 267. For example, by selecting hazardous material handling qualification button 265 using selection device 145, driver list 268 is shown with five drivers having hazardous material handling qualifications. Alternatively, hazardous material handling qualification button 265 may be selected by the user using a keyboard, a keypad, a touch screen, or by other types of selection devices. Driver list 268 may include a total number of drivers available and/or may include individual names of drivers. As shown in Figure 3, driver list 268 shows the total number of five drivers available with materials qualifications along with their names. Bullpen 260 may change the depiction of one or more driver qualification buttons depending on the view of driver list 268 the user of convoy planning tool 100 has selected.

Tactical command 270 may be indicated on convoy planning tool 200. Tactical command 270 may allow viewing of the serial lead identifier of second convoy 220 when the user of convoy planning tool 200 selects the serial lead identifier button 272 using selection device 145. Similarly, tactical command 270 may allow viewing of the serial configuration, the march unit configuration, or command and control of second convoy 220 when the user selects a tactical command button, such as serial configuration button 274, march unit button 276, or command and control button 278, respectively. The tactical command buttons may be selected using selection device 145 or by a keyboard, keypad, a touch screen, or by other types of selection devices. Tactical command 270 may change the depiction of one or more tactical command buttons depending on the view the user of convoy planning tool 200 has selected.

Convoy planning tool 200 may also provide other information to the user. As shown in Figure 2, convoy planning tool 200 may display to the user the permits obtained, permits needed, or both, upon selection by the user of permits tab 280. Similarly, convoy planning tool may display to the user the convoy manifest, convoy map, or expected weather *en route* upon selection by the user of manifest tab 285, map tab 290, or weather tab 295, respectively. Tabs 280-295 may be selected by a user using selection device 145, or by a keyboard, keypad, touch screen, or another type of selection device.

Figure 3 is a view of the convoy planning tool 200 showing additional information 330 about a selected vehicle 320 in accordance with an embodiment of the invention. Selected vehicle 320 is shown in Figure 3 as being selected by selection device 145. However, it is to be understood that selected vehicle 320 could be selected by a user of convoy planning tool 100 using a keyboard, keypad, a touch screen, or by other types of selection devices.

Upon selection of selected vehicle 320, additional information 330 may be displayed. Additional information 330 may include vehicle information 340, such as vehicle identifier and vehicle type as shown in Figure 3. A vehicle identifier may be an RFID identifier, a bar code, a group of numeric, alphabetic, or alphanumeric characters, or any other suitable identifier for a vehicle using any suitable identification technology. Other vehicle information in additional information 340 may include total mileage, maintenance information, license/permit information, vehicle weight information, and other vehicle information and attributes.

Additional information 330 may include cargo information 350 such as cargo identifier, cargo size, cargo type, cargo value, hazardousness information about the cargo, taxation information, date/time information, source/destination information, as well as other cargo information and attributes. Cargo identifier may be identified using the same identifiers and technologies described above as used for vehicle identifiers.

Additional information 330 may include driver information 360, including a driver identifier, driver qualifications/permits, amount of driver rest, and other driver information and attributes. The driver identifier may include a name or names of the driver, social security numbers, drivers license numbers, group of numeric, alphabetic, or alphanumeric characters, or any other suitable identifier for a driver. Additional information 330 may come from one or more driver records stored in a driver database. The driver database may use the database interfaces, structures, and providers discussed above for the available vehicle database and the convoy requirements database. Note that the available vehicle database, the convoy requirements database, and the driver database may be combined into a convoy planning database. Additional information 330 may also include vehicle communication information 370, shown in Figure 3 as an Internet Protocol (IP) address. Other types of vehicle communication information include call signals, radio frequencies, phone numbers, and similar types of information that could be used to communicate with the vehicle.

Figure 4 is a convoy planning template 400 indicating a potential configuration of a convoy based on convoy requirements and additional information, in accordance with an embodiment of the invention. Convoy planning template 400 may include pre-defined sub-groups based on the convoy requirements. As shown in Figure 4, lead unit 410, main unit 414, and rear unit 418 are included based on the convoy requirements for the route and protection, while refrigerator truck sub-group 414 and tanker truck sub-group 416 are included based on the convoy requirements for cargo. The sizes of the sub-groups may also be generic or specifically based on the convoy requirements. Figure 4 depicts a general size 420 for lead unit 410 of "1-3" as well as a general size 422 for refrigerator truck sub-group 414 of "1-50" and a specific size 424 of "require 4" based on convoy requirements for cargo.

Convoy template 400 may take aspects of the convoy configuration into account, such as the size of the convoy. Figure 4 shows communication vehicle 430 as part of convoy template 430 based on the size of convoy, which is one aspect of the convoy configuration. Optionally required vehicles may be included in the convoy template, and may be given a distinctive appearance for the user of convoy planning tool 100. Communication vehicle 430 is shown in Figure 4 using dashed lines to indicate to a user of convoy planning tool 100 that communication vehicle 430 is optionally part of the convoy.

Convoy template 430 may be created based on input from one or more artificial intelligence systems. An artificial intelligence system may be part of convoy planning tool 100 or may communicate with convoy planning tool 100 through one or more convoy planning intelligence interfaces. Advice 435 that "communication may be required" may be from one or more artificial intelligence systems, such as an expert system, case based reasoning system or other such artificial intelligence system. The one or more artificial intelligence systems may operate on information gathered from a variety of sources, alone or in combination, including but not limited to debriefings from previous convoys, intelligence estimates, military and/or commercial reports and orders, and searches of the Internet and/or other computer networks, The one or more artificial intelligence systems may provide advice 435 about other topics, such as route conditions, vehicle capabilities, driver capabilities, and cargo handling, among others. Advice 435 may also be provided to a user of convoy planning tool 100 separately from convoy template 400, such as in an advice window.

Figure 5 is a depiction of a route 500 for a convoy with multiple types of points along route 500, including sources 510 and 515, destinations 520 and 525, checkpoints 530, and rally points 540. Route 500 may be depicted by convoy planning tool 100. Route 500 for a convoy may be provided separately or as part of the convoy requirements.

Route 500 may have one or more sources or starting points. As shown in Figure 5, route 500 has two starting points 510 and 515. A starting point may be indicated pictorially and/or textually. Figure 5 shows starting point 510 indicated both pictorially using starting point dot 512 and textually using start text box 514. One or more destinations may be shown along route 500. Figure 5 shows destinations 520 and 525 for route 500. Intermediate points may be shown along route 500. Figure 5 shows checkpoints 530 and rally points 540 as intermediate points along route 500.

Different types of points along route 500 may be indicated using different colors, shades, and/or patterns for the different types of points. As shown in Figure 5, starting point dots 512 and 516 are shown in blue with a grid pattern, destination dots 522 and 526 are shown in indigo with an "X" pattern, checkpoint dots 532 and 536 are shown in sky blue with a checkmark pattern, and rally point dot 540 is shown in green with a striped pattern. Routes may also be described and/or depicted in a format in conformance with MIL-SPEC-2525 or in one or more other specification formats, such as a pair of source and destination addresses (e.g. from Camp Victory to Fort Ord), as a strip map, as a contour map, as a Universal Resource Indicator (URI) for one or more web-based mapping tools, such as MapQuest, Google Maps, or the like.

Figure 6 is a communication overview 600 showing the communications and vehicle attributes 620 in a third convoy 610, in accordance with an embodiment of the invention. Communications overview 610 may be provided, wholly or in part, by the aforementioned configuration aware packet routing method or may be provided as part of convoy planning tool 100. Figure 6 shows communications overview 600 as part of convoy planning tool 100, with a depiction of third convoy 610 surrounded by a dashed line and communications attributes 620 for some or all vehicles in third convoy 610.

Communications attributes 620 may include vehicle information, communications information, and personnel information, as well as other types of information. As shown in Figure 6, communications attributes 620 include a vehicle name as part of the vehicle information that corresponds to a vehicle shown in third convoy 610. Figure 6 shows other vehicle information as part of communications overview 600, including vehicle identifier attribute 622, though it is to be understood that more or less vehicle information may be provided as part of communications overview 600. Figure 6 shows that in communication overview row 630, the vehicle acting as "Lead Unit 1" in third convoy 610 has vehicle identifier attribute 622 of "12345".

Communication information shown in Figure 6 includes an IP status attribute 623, a voice status attribute 624, and a communications hub status attribute 625, though it is to be understood that more or less communication information may be provided as part of communications overview 600. Figure 6 shows that in communication overview row 630, the vehicle acting as Lead Unit 1 in third convoy 610 has IP address "a.b.c.d" and that the vehicle is connected to the IP network in the IP status attribute 623, that the vehicle has voice communications with call sign "Alpha 1" in the voice status attribute 624, and that the vehicle uses "Hub 1" for communications and that a communications hub is not present on the vehicle in communications hub status attribute 625.

Personnel information shown in Figure 6 includes a driver attribute 626 and a passenger attribute 627, though it is to be understood that more or less personnel information may be provided as part of communications overview 600. Figure 6 shows that in communication overview row 630 that the vehicle acting as "Lead Unit 1" in third convoy 610 is driven by "Sgt. Doe" and that "Maj. Patton" is a passenger in the vehicle.

Figure 7 is a completed convoy configuration 700 of fourth convoy 710 as planned by the convoy planning tool 100, in accordance with an embodiment of the invention. The completed configuration shown is the result of interactive convoy planning by the user of convoy planning tool 100. The configuration may be determined to be complete from user input, such as by pressing DONE button 160, by convoy planning tool 100 algorithmically determining that convoy requirements and selections 230 are met by the convoy, or by a combination of user input and algorithmic determination. Once the convoy configuration is complete, the convoy may transport cargo along a route comprising at least one roadway in the completed configuration.

Figure 8 is a depiction of a route display 800 of convoy planning tool 100 for route 500, indicating the real-time position of a fifth convoy 805 *en route,* in accordance with an embodiment of the invention. Convoy planning tool 100 may determine the real-time location of a convoy using a locator device 190 and display the real-time location of the convoy along the route. The locator device 190 may be part of convoy planning tool 100 as depicted in Figure 1A, such as a Global Positioning System (GPS) device, radio-locator device, or similar location device on the computing device 170 executing convoy planning tool 100. Alternatively, a locator device may be attached to one or more vehicles in the convoy, or part of the equipment of one or more of the personnel in the convoy. Alternatively, the real-time position of fifth convoy 800 may be determined using algorithmic means, such as a calculation of distance traveled along the route based on projected or actual travel times.

Figure 8 shows route display 800 displaying the real-time position of fifth convoy 805, determined using a locator device, traveling along route 500 between Rally Point 1, shown with indicator 540, and Rally Point 2. While not shown in Figure 8, route display 800 may show the real-time position of one or more vehicles in fifth convoy 805 (as opposed to a single depiction for the whole convoy), either as individual vehicles or in sub-groups.

As with the points along the route, the real-time position of a convoy may be shown both textually and pictorially. Figure 8 shows route display 800 indicating the real-time position of fifth convoy 805 both textually with convoy text box 810 and with convoy dot 812. A convoy dot may differ from points on the route in size, color, and pattern. Figure 8 shows convoy dot 812 as larger, with a different color, and with a different pattern than the various route points 512-540. As the convoy moves along the route, the depictions of points along the route may change. As shown in Figure 8, fifth convoy 800 has passed by Rally Point 1, indicated with indicator 540, and the textual description of Rally Point 1 is not shown (in comparison with the "Rally 1" description for rally point 540 as shown in Figure 5) to indicate that the convoy has passed Rally Point 1. Other means of changing depictions of points may indicate the real-time position of a convoy has passed the point, such as changes in color, size, pattern of the point, the depiction of the roadways making up the route, or other visual changes in the depiction of route 500.

As fifth convoy 800 reaches various points along route 500, one or more vehicles of fifth convoy 800 may communicate with central planning entity 830 using data, voice, or both data and voice communications. While central planning entity 830 is shown as being accessible at checkpoint 530, it is to be understood that central planning entity may be accessible at other points along route 500. The data and voice communications may provided, wholly or in part, by the aforementioned configuration aware packet routing method or as part of convoy planning tool 100. Data communications may include use of a wireless or wired wide-area network, a Wi-Fi or other short-range network, or other such data communications networks. The data communications may include one or more World Wide Web (WWW) web pages, web portals, electronic mail, file transfer protocol, or other such data communications methods or protocols. Voice communications may use wired and/or wireless telephone networks, voice over IP (VoIP) networks, or other voice communications networks.

Central planning entity 830 may provide information about various types of convoy-related information, including changes in the route, *en route* cargo deliveries, changes in delivery times, amount of cargo to be delivered to one or more destinations, weather conditions, addition or removal of vehicles from fifth convoy 800, and the like. The occupants of the one or more vehicles in fifth convoy 800 may also communicate convoy-related information to central planning entity 830, such as *en route* conditions, updated delivery, vehicle, driver, and/or occupant status information, or the like.

Figure 9 is a set of user role assignments 900, indicating primary and backup roles 910, for defining access to the convoy planning tool based on an assigned user role for the convoy planning tool, in accordance with an embodiment of the invention. A set of user role assignments may include the user role, convoy assignments, vehicle assignments, driver assignments, communications assignments, route assignments, and back up roles. It is to be understood that a set of user role assignments may have more or fewer assignments than described herein.

For purposes of this embodiment of convoy planning tool 100, a user role is defined by values of a set of user role assignments. Figure 9 shows user role assignments 900 as a set, including: user role 920, convoy configuration assignments including convoy configuration assignment 922, convoy viewing assignment 924 and convoy change assignment 926, vehicle assignments including vehicle records assignment 928, driver assignment 930, communications assignments including viewing of communications configuration assignment 932, and configuration of communications assignment 934, view route assignment 936, and backup role assignment 938. The values of the set of assignments for a particular user role may control access to one or more aspects of convoy planning tool 100.

As shown in Figure 9, a convoy commander role is indicated in by the set of assignments for commander role 940. Commander role 940 grants the role of "Convoy Cmdr." complete access to the specified aspects of convoy planning tool 100, including: the ability to configure, change, and view the convoy as specified with the "Yes" values for convoy configuration assignment 922, convoy viewing assignment 924, and convoy change assignment 926, respectively, to view vehicle assignments as specified with the "All" value for the vehicle records assignment 928, to view driver records as specified with the "All" value for the driver assignment 930, to view and configure communications as specified with the "Yes" values in the viewing of communications configuration assignment 932 and configuration of communications assignment 934, respectively, and to view the route as specified with the "Yes" value for view route assignment 936. A specified role may have backup roles that are allowed to use the assignments for that user role if the person acting in the specified user role is unavailable. As shown in Figure 9, the back up role for commander role 940 is the "Asst. Convoy Cmdr." as specified by backup role assignment 938 in commander role 940.

Assignment values may be binary (e.g. yes/no or on/off) in nature and/or may permit a range of values. For example, the configuration convoy assignment 922 is a binary value shown with Yes or No values in Figure 9, that permits convoy commander role 940 to configure the convoy using convoy planning tool 100 based on the "Yes" value for configuration convoy assignment 922, but does not permit assistant convoy commander role 950, March Unit 1 leader role 960, or lead vehicle commander role 970 to configure the convoy based on the "No" values for configuration convoy assignment 922 for each of these three roles, respectively.

Figure 9 shows the vehicle records assignment 928 as having a range of values based on the sub-groups in the convoy, including a value of "All" for access to all vehicle records granted to commander role 940 and assistant commander role 950, a value of "March Unit 1" for access to all vehicle records for vehicles assigned to March Unit 1 granted to the March Unit 1 leader role 960, and "Lead Vehicle" for access to the vehicle records for the lead vehicle granted to the lead vehicle commander role 970.

### 2. Convoy Planning Method

Figure 10 is a flowchart 1000 describing a method for planning a convoy using a convoy planning tool, in accordance with an embodiment of the invention. The method begins with the convoy planning tool receiving convoy requirements in block 1010. The convoy planning tool may receive the convoy requirements from a user entering the requirements into the convoy planning tool, from the convoy requirements database, a combination of user entry and the convoy requirements database, or from some other source or combination of sources.

At block 1020, convoy planning tool 100 finds available vehicles and displays the available vehicles to the user, such as in vehicle corral 250. Convoy planning tool 100 may find the available vehicles from a user entering information about the available vehicles into the convoy planning tool, from the available vehicle database, a combination of user entry and the available vehicle database, or from some other source or combination of sources. The available vehicles are displayed to the user in pictorial form, textual form, or a combination of text and pictures. Available vehicles may be displayed individually or grouped by vehicle type, such as a group of refrigerator trucks. Additional information, such as maintenance information, may be displayed with the available vehicles.

At block 1030, convoy planning tool 100 finds available drivers and displays the available drivers to the user, such as in bullpen 260. The convoy planning tool may find the available drivers from a user entering information about the available drivers into the convoy planning tool, from the driver database, a combination of user entry and the driver database, or from some other source or combination of sources. The available drivers are displayed to the user in pictorial form, textual form or a combination of text and pictures. Additional information, such as driver licensing information, may be displayed with the available drivers.

At block 1040, the user of convoy planning tool 100 selects one or more available vehicles and drivers. The user may select an available vehicle and/or an available driver using a computer mouse operation such as selecting or clicking on a depiction of an available vehicle or an available driver, by keystrokes on a keyboard or keypad, by use of a touch screen or touch pad, or by another equivalent selection device. The user of convoy planning tool 100 may associate one or more selected drivers with one or more available vehicles as well, by using the computer mouse to drag or move the depiction of an available driver to the depiction an available vehicle and then dropping or unselecting the depiction of an available driver onto the depiction of the available vehicle. Preferably, convoy planning tool 100 ensures available drivers and available vehicles are associated one-to-one. Alternatively, the user may associate one or more selected drivers with one or more available vehicles by keystrokes on a keyboard or keypad, by use of a touch screen or touch pad, or by another equivalent selection device. Further, the association of available vehicles and available drivers may be done as part of blocks 1020 and/or 1030, obviating the need for the user of convoy planning tool 100 to associate drivers and vehicles.

At block 1050, the user of convoy planning tool 100 orders the one or more available vehicles within a convoy, to create a convoy configuration. The user may order the vehicles by using the computer mouse to select or click on depictions of one or more available vehicles, dragging or moving the depictions of the one or more available vehicles to a position within a depiction of the convoy, and dropping or unselecting the depictions of the one or more available vehicles at the position in the depiction of the convoy. Alternatively, the user may order the vehicles by keystrokes on a keyboard or keypad, by use of a touch screen or touch pad, or by another equivalent selection device.

At block 1060, convoy planning tool 100 determines if the convoy is completely configured. Convoy planning tool 100 may determine that the convoy is completely configured based on input from the user, algorithmically, a combination of user input and algorithmically, by external signals, or by other means. If convoy planning tool 100 determines that the convoy is completely configured, convoy planning tool displays the completed convoy configuration in block 1070. Alternatively, if convoy planning tool 100 determines that the convoy is not completely configured, convoy planning tool 100 returns to block 1020 and begins processing from that point.

### 3. Variations

The term "convoy", as used herein, is not limited to military convoys. Instead, a convoy may refer to any fleet of vehicles in a commercial or non-commercial setting, such as fleets of commercial trucks or a fleet of school buses.

### 4. Conclusion

While certain features and embodiments of the present invention have been described in detail herein, it is to be understood that the invention encompasses all modifications and enhancements within the scope and spirit of the following claims.

## Claims

1. A convoy planning tool for planning a configuration for a convoy that travels on at least one roadway, comprising:
a computer processor;
a selection device,
data storage; and
machine language instructions stored in the data storage and executable by the computer processor to perform functions, comprising:
displaying at least one available vehicle in a vehicle corral;
upon request of the user using the selection device, placing the at least one selected vehicle in a placed position in the convoy; and
displaying a configuration of the convoy indicating the at least one selected vehicle in the placed position in the convoy.

2. The convoy planning tool of claim 1, wherein the functions further comprise:
finding at least one available vehicle for the convoy;
selecting at least one available vehicle from the vehicle corral;
determining the configuration of the convoy is completed; and
displaying the completed configuration of the convoy.

3. The convoy planning tool of claim 1, wherein the convoy planning tool is a portable computing device loaded with software comprising the machine language instructions.

4. The convoy planning tool of claim 1, wherein the functions further comprise:
receiving at least one requirement for the convoy;
searching for at least one available vehicle that at least partially fulfills the at least one requirement; and
displaying the at least one available vehicle in the convoy corral.

5. The convoy planning tool of claim 1, wherein the functions further comprise:
indicating a route for the convoy.

6. The convoy planning tool of claim 1, wherein the functions further comprise:
displaying at least one available driver for at least one available vehicle of the convoy.

7. The convoy planning tool of claim 1, wherein the machine language instructions are further executable to display at least one convoy template.

8. The convoy planning tool of claim 7, wherein the at least one convoy template is provided by at least one expert system.

9. The convoy planning tool of claim 1, wherein the convoy planning tool further comprises a packet communication interface, and wherein the functions further comprise:
enabling communication with the convoy via the packet communications interface.

10. The convoy planning tool of claim 1, wherein the functions further comprise:
defining at least one user role for the convoy planning tool, and
allowing access to the convoy planning tool based on the defined at least one user role.
